# EUROPEAN PATENT SPECIFICATION

(11) **EP 2 909 605 B1**
(45) Date of publication and mention of the grant of the patent: **31.01.2018**
(21) Application number: 13801713.2
(22) Date of filing: 15.10.2013
(51) Int. Cl.: G01N 15/06, G01N 31/22

(54) **METHOD FOR THE DETECTION AND RAPID QUANTIFICATION OF ATMOSPHERIC PARTICULATES IN A SAMPLE AND/OR OF THE OXIDATIVE POWER**
VERFAHREN ZUM NACHWEIS UND ZUR SCHNELLEN QUANTIFIZIERUNG VON ATMOSPHÄRISCHEN PARTIKELN IN EINER PROBE UND/ODER DER OXIDATIVEN LEISTUNG
PROCÉDÉ POUR LA DÉTECTION ET LA QUANTIFICATION RAPIDE DE PARTICULES ATMOSPHÉRIQUES DANS UN ÉCHANTILLON ET/OU DU POUVOIR OXYDANT

(30) Priority: 17.10.2012 IT MI20121759
(43) Date of publication of application: 26.08.2015
(73) Proprietor: Università degli Studi di Milano - Bicocca, 20126 Milano (IT)
(72) Inventor: PARENTI, Paolo, I-22063 Cantù (CO) (IT); CIRIELLO, Francesco, I-6987 Caslano (IT); GUALTIERI, Maurizio, I-20019 Settimo Milanese (MI) (IT); RUFFO, Riccardo, I-20099 Bresso (MI) (IT); CAMATINI, Marina, Carla, I-20133 Milano (IT)
(74) Representative: Zambardino, Umberto
(86) International application number: PCT/IB2013/002312
(87) International publication number: WO 2014/060826

(56) References cited:
- MYEONG Y. CHUNG ET AL: "Aerosol-Borne Quinones and Reactive Oxygen Species Generation by Particulate Matter Extracts", ENVIRONMENTAL SCIENCE & TECHNOLOGY, vol. 40, no. 16, August 2006 (2006-08), pages 4880-4886, XP055050990, ISSN: 0013-936X, DOI: 10.1021/es0515957
- ALAM S. HASSON ET AL: "Production of stabilized Criegee intermediates and peroxides in the gas phase ozonolysis of alkenes: 1. Ethene, trans -2-butene, and 2,3-dimethyl-2-butene", JOURNAL OF GEOPHYSICAL RESEARCH, vol. 106, no. D24, 27 December 2001 (2001-12-27), pages 34131-34142, XP055093943, ISSN: 0148-0227, DOI: 10.1029/2001JD000597
- EIGUREN-FERNANDEZ A ET AL: "Redox and electrophilic properties of vapor- and particle-phase components of ambient aerosols", ENVIRONMENTAL RESEARCH, ACADEMIC PRESS, SAN DIEGO, CA, US, vol. 110, no. 3, 11 February 2010 (2010-02-11), pages 207-212, XP026946183, ISSN: 0013-9351, DOI: 10.1016/J.ENVRES.2010.01.009 [retrieved on 2010-02-11] cited in the application
- YUPAPORN SAMEENOI ET AL: "Microfluidic Electrochemical Sensor for On-Line Monitoring of Aerosol Oxidative Activity", JOURNAL OF THE AMERICAN CHEMICAL SOCIETY, vol. 134, no. 25, 27 June 2012 (2012-06-27), pages 10562-10568, XP055050954, ISSN: 0002-7863, DOI: 10.1021/ja3031104 cited in the application

## Description

### Field of application

The present invention relates to a method for detection and rapid quantification of atmospheric particulate and / or its oxidative potential in particular but not exclusively by means of a biosensor. The present invention also relates to a device and a kit of devices for the implementation of this method.

### Prior art

It is well known that airborne particulate, also defined Particulate Matter, consists essentially of particles with defined size characteristics produced by human activities, mainly industrial and transportation activities, and are one of main responsible of air pollution. The particulate matter is normally designed under the symbol PMx - "Particulate Matter x" - which indicates atmospheric suspended particulate matter - aerosols - with an aerodynamic diameter less than x microns.

Several epidemiological studies, as well as *in vivo* and *in vitro* experiments have now found a correlation between a (extended) exposure to particulate air pollution and the onset of certain diseases, especially respiratory diseases (such as bronchitis and asthma) and cardiovascular diseases; moreover a significant carcinogenic effect was demonstrated in *in vivo* studies which was induced by the exposure to particulate air pollution as well as to fine dusts generated by traffic emissions. In particular, the onset of these diseases appear to be correlated with the particles small size and the chemical composition of the particles constituting the particulate matter. The small size confers to the particles the ability to penetrate deeply into the lungs and an high oxidative potential thereby resulting the ones potentially with higher impact on human health.

Therefore, the determination and quantification of particulate air matter and its oxidative potential is a fundamental need for the objective assessment of the state of air quality, the prevention of health risks and the consequent reduction of the corresponding social costs. This determination is also prescribed by the regulations in force at national and international level.

The reference methodology concerning, for example, the determination of the mass concentration of particulate PM₁₀ is based on sampling representative samples of particulate material, on their collection on filters and the subsequent determination of their mass by a differential gravimetric technique of "double weighing" (determination of the mass of a filter before and after PM₁₀ sampling).

However, although this method is adequate and applied extensively for air quality monitoring, it is quite complex at an operational level since it requires the use of highly specialized personnel for a relatively long time and the use of specific high-cost equipment and planning. In addition, the measurements made with this method does not provide an adequate quantification of the actual oxidative potential of particulate air matter samples, whose chemical composition may vary depending on the site and sampling time, regardless of the mass concentration of particulate matter detected.

Automatic instruments are often used in air quality control networks; these equipments are able to provide, almost in real time, an estimate of the average mass concentration of particulate matter in the period considered (typically average concentrations every 24 hours).

Such instruments work accordingly to a variety of detection techniques such as the beta attenuation technique that is the measurement of the attenuation of a stream of beta radiation (emitted for example by a source of ¹⁴C) crossing a homogeneous film of matter.

However, at the state of the art, the performances of most of the automatic instruments are not entirely satisfactory, in particular as regards the reliability of the recorded data, that may significantly differ from the actual ones.

The paper of Syunji Yokota et al. : " The effects of organic extract of diesel exhaust particles on ischemia / reperfusion - related arrhythmia and on pulmonary inflammation ," (Journal of Toxicological Sciences vol . 33 no . 1, 1st January 2008) demonstrates , reports a study on the effects of the organic extracts of particulates of the exhaust gas of diesel engines (DEP) in relation to the occurrence of certain diseases. This publication describes the sampling of the particulates (DEP), the phases of sample treatment as well as the measurement method of the samples oxidative potential. In this regard, samples of DEP are suspended in an organic solvent (DMSO) and then mixed with DTT, a reducing agent, to form oxidizing species in a predetermined incubation time. After incubation, an aliquot of this sample is mixed with DTNB, which reacts with the residual DTT developing a reaction product measurable by spectrophotometry with absorbance quantification. Then, the oxidative potential of the sample is determined by comparing the absorbance measures for the sample, which being dependent on the content of residual DTT will be also correlated to the concentration of oxidizing species in the reaction medium, with a scale of values for the oxidative potential of H₂O₂, such compound being taken as the reference standard.

Similar methods to those shown above for oxidative potential determination in particulate air matter samples are also described in the following publications:
- WERUKA RATTANAVARAHA ET AL: "The reactive oxidant potential of different types of aged atmospheric particles: An outdor chamber study", Atmospheric Environment Pergamon GB, vol. 25 no. 23, 1 April 2011;
- VISHAL VERMA ET AL: "Contribution of water-soluble and Insoluble Components and their hydrophobic/hydrophilic subfractions to the reactive oxygen species-generating potential of fine ambient aerosols", Environmental Science & Technology vol. 46, no. 20, 16 October 2012; e
- EIGUREN-FERNANDEZ ET AL: "Redox and electrophilic properties of vapor- and particle-phase components of , Environmental Research Academic Press, San Diego, CA, US, vol. 110 n.3, 1 April 2010.

However, the methods described in the above documents entail an elevate number of steps for the preparation and processing of the samples since they require repeated steps of extraction of the reactive organic fraction sometimes complemented by sonification processes and/or filtration and/or drying steps of the sample, relatively long incubation times of the sample with DTT as well as a second reaction with DTNB to determine the residual DTT. Therefore, the above methods appear to be complex from the operational point of view as well as expensive to implement.

The publication of Yupaporn Sameenoi et al. "Microfluidic Electrochemical Sensor for On-line Monitoring of Aerosol Oxidative Activity", The Journal of the American Chemical Society , vol. 134 no . 25 , June 27, 2012 also reports also a method for the detection of the oxidative potential of samples of particulate matter that uses an assay with DDT as described above. However, unlike the method described in the publication by Syunji Yokota et al cited above, the publication of Yupaporn Sameenoi et al. proposes to determine the content of residual DTT, that is related to the concentration of oxidizing species formed in the reaction medium, through electrochemical measurements with electrodes selective for the reduced state of DTT.

The publication Myeong Y. Chung et Al., "Aerosol-Borne Quinones and Reactive Oxygen Species Generation by Particulate Extracts", Environ. Sci. Tech., 2006, 40, 4880-4886, describes a study wherein atmospheric particulate samples, containing quinones, are collected on Teflon filters and analyzed. Teflon filters are cleaned with dichloromethane and, later, the so-obtained extract is divided in two fractions containing quinones: fraction A and fraction B. Quinones contained in fraction B are converted to their diacetylated derivatives and, then, characterized by GC-MS. Then, a portion of fraction A is directly characterized by GC-MS, whereas another portion of fraction A is used in order to analyze the ability of quinones to generate reactive oxygen species (ROS), through DTT analysis. Such an analysis causes the formation of H₂O₂ after the reaction of dithiothreitol (DTT) with quinones. The concentration of H₂O₂ is determined by analyzing specific samples using a HPLC-fluorescence technique described in Alam S. Hasson et Al., "Production of stabilized Criegee intermediates and peroxides in the gas phase ozonolysis of alkenes: 1-ethene, trans-2-butene, and 2,3-dimethyl-2-butene", Journal of Geophysical Research, 2011, 106, 34131-34142), which involves an enzyme-catalyzed reaction of the oxidizing species (H₂O₂) with para-hydroxy phenylacetic acid to produce a dimer, and envisages the measurement a fluorescence property correlated to the concentration of the dimer under alkaline conditions.

### Summary of the invention

This technical problem is solved by a method for the detection and quantification of atmospheric particulate and/or its oxidative potential in a sample, characterized by the following steps:
- collection of a sample of ambient particulate matter,
- treatment of such a sample with an organic solvent to obtain a solution or a suspension,
- reaction of said solution or said suspension or a fraction of them with a reducing agent in operating conditions such as to form an
   oxidizing species, wherein said oxidizing species is constituted by superoxide radicals,

- measurement of a variation of a property correlated to the concentration of said oxidizing species formed in the reaction medium, said variation of property resulting from the consumption by chemical reaction of said oxidizing species with a detection substance or resulting from the interaction of said oxidizing species with a detection substance,
- evaluation of the content of particulate air matter and/or the oxidative potential of said sample by correlating the measured value of said property in the reaction medium with at least one value of the same property in at least one reference sample or derivate thereof having a known content of particulate matter and/or with a scale of values related to the oxidative potential of a substance or a molecule known for its oxidant ability, such as hydrogen peroxide.

### Detailed Description

The present invention is based on the ability of the quinone derivatives of some polycyclic aromatic hydrocarbons (PAHs) normally present in the fine fraction of atmospheric particulate matter to generate superoxide radicals from molecular oxygen in the presence of appropriate reducing agents. Then, by measuring an appropriate characteristic or property able to detect the formation of superoxide radicals as described in detail afterward, it is possible to determine (or at least to estimate) the amount of atmospheric particulates in the sample subjected to the analysis, comparing the unknown sample with samples of known concentration of particulate matter as well as comparing the oxidative potential of this sample with a substance having a known oxidizing ability, such as hydrogen peroxide.

In the method according to the invention, the sample to be analyzed can be obtained by collecting the particulate pollution on appropriate collection devices by means of per se conventional methods. The collecting device may be constituted for example by filters as known in the state of art which allow the passage of ambient air and retain the particulate material.

In accordance with the invention, the atmospheric particulate sampled is recovered from the collection device (e.g. a filter) by washing it with a suitable solvent as to obtain a solution or suspension.

The solvent is an organic solvent having a good affinity towards the quinone derivatives present in the atmospheric particulate matter where affinity means substantially the ability of the solvent to bring into Preferably, the organic solvent is selected among dimethyl sulfoxide (DMSO), acetonitrile and their combinations.

The washing of the collection device with the organic solvent allows obtaining the sample for the measurement of atmospheric particulate according to the method of the invention, such a sample being substantially in the form of a solution or suspension of the atmospheric particulate removed from the collection device in the chosen solvent.

This sample may be used as such for the subsequent reaction steps and detection according to the method of the invention. However, in the case of the suspension, it may be preferable to previously separate the solid and liquid fractions to improve the detection sensitivity, also in relation to the detection system chosen for the measurement.

Such separation can be performed in a per se conventional manner, for example by filtration or centrifugation of the suspension of particulate air matter in the organic solvent.

At the end of the separation, the solid fraction containing the particulate material is discarded and the liquid fraction containing the quinone derivatives constitutes the sample to be analyzed in accordance with the invention.

In case of collection of the atmospheric particulate on the filter, the separation of the particulate material (solid fraction) can be done directly by washing the collection filter.

In the method according to the invention, the suspension of particulate matter in the organic solvent or the liquid fraction extracted from this suspension is reacted in the presence of molecular oxygen and a reducing agent in order to form superoxide radicals.

The reducing agent itself is conventional and can be selected between dithiothreitol (DTT) and tris (2-carboxyethyl) phosphine (TCEP). The use of TCEP however, is particularly preferred since it usually provides, for the same analyzed sample, a higher response (about 4-7 times) compared to DTT (used in the known methods), to all advantage of a greater sensitivity of the method according to the invention. Therefore, the use of TCEP as a reducing agent of samples of particulate matter in order to detect and quantify the particulate matter itself and/or its oxidative potential is innovative and advantageous with respect to the methods of the state of art mentioned above.

The concentration of the reducing agent in the reaction mixture is preferably between 0.05 mM and 0.15 mM, in particular 0.1 mM.

This interval is optimal for a time of reaction able to produce an adequate amount of oxidizing species to be subsequently detected with an appropriate sensitivity by the detecting device (as will be explained in more detail below), preventing or at least making negligible at the same time side reactions which might negatively affect the subsequent detection, such as the possible reaction between the reducing agent and the detecting means.

It is appropriate that the reaction be conducted under conditions of controlled pH, preferably keeping it around the neutrality (7.0-7.5). The control of pH is important for maintaining the reducing potential and the stability of the reducing agent. This can be done by adding to the reaction mixture an appropriate buffer system (eg. TRIS-HCl) at predetermined concentrations such as to ensure a substantially constant pH.

It has been found that the concentration of superoxide radicals, which are formed in the reaction mixture is closely correlated to the concentration of the quinone derivatives of polycyclic aromatic hydrocarbons contained in the suspension or organic solution of atmospheric particulates or in its liquid fraction place under reaction. In turn, the concentration of the quinone derivatives of polycyclic aromatic hydrocarbons is closely correlated to the amount of particulate matter in the starting sample, so that the detection of the superoxide radicals formed in the reaction medium allows quantifying, or at least estimating the content of particulate matter in the test sample.

Furthermore, regardless of the determination of the absolute amount of atmospheric particulates present in the sample under analysis, the quantification of quinone derivatives present in atmospheric particulate through their ability to generate superoxide radicals in the given conditions of the method according to the invention, represents a direct determination of the oxidative potential, and therefore of the potential harmfulness of the sample analyzed.

In the method according to the invention, the detection of superoxide radicals can be performed in various ways by measuring a property which can be correlated to the concentration of superoxide radicals formed in the reaction medium.

According to an embodiment of the invention, the detection of superoxide radicals is carried out by the spectroscopic measurement of a variation of a spectroscopic property of a detection substance able to consume through a chemical reaction the superoxide radicals developed in the reaction medium.

Preferably, such a spectroscopic property is chosen between absorbance and Raman scattering.

The detection substance can be any substance capable of consuming superoxide radicals formed in the reaction mixture and having at least one property measurable by spectroscopy (in particular absorbance or Raman scattering) which is variable with the variation of the concentration of superoxide radicals.

In particular, such a substance can be an emo-protein capable of reacting with superoxide radicals according to a reaction of oxidation-reduction (redox) passing from an oxidized state to a reduced state. The variation of the spectroscopic property of the detection substance, measured in a predetermined period of time, is therefore directly proportional to the concentration of superoxide radicals formed in the reaction mixture, which in turn is directly proportional to the amount of reactive quinone species (and therefore to the content of atmospheric particulate matter and / or oxidative potential in the starting sample).

Preferably, the above emo-protein consists of cytochrome c.

According to another embodiment of the invention, particularly preferred, the detection of superoxide radicals is carried out by the electrochemical measurement of a variation of electric current that can be associated with the concentration of superoxide radicals.

In accordance with the present invention, the measurement of the variation of electric current is carried by a sensor or biosensor comprising a measuring electrode, an auxiliary electrode (or counter electrode), and a reference electrode all made of conductive material, the measuring electrode having a measuring surface coated and activated with a layer of at least one organic and/or biological detection substance able to interact with superoxide radicals by providing an electrical signal proportional to the amount of said superoxide radicals formed in the reaction mixture (electrolyte solution) with which the electrode comes in contact.

According to an embodiment of the invention, the coating of the measuring surface of the electrode is carried out by depositing a monolayer of at least one alkanethiol, preferably a mixture of alkanethiols.

According to an embodiment of the invention, particularly preferred, this mixture comprises 11-mercapto-1-undecanol (MU) and 11-mercaptoundecanoic acid (MUA).

However, it is also possible use other alkanethiols than those mentioned earlier.

The deposition of the monolayer of at least an alkanethiol may be performed by methods conventional per se. For example, the measuring electrode can be put into contact with a mixture of alkanethiols for a predetermined "activation" time adapted to allow the anchoring of the molecules of thiols on the surface of the electrode and then rinsed with an appropriate solvent (eg ethanol) to remove unbound thiols. It is then necessary to perform a final rinse with water which is also the solvent in which the electrode is immersed during storage.

According to another embodiment of the invention, the coating of the electrode measurement is carried out by immobilizing an emo-protein, preferably cytochrome c, on the electrode surface.

The immobilization procedure of the emo-protein, in particular cytochrome c is itself conventional and may be done, as known in the art, by a first immobilization of alkanethiols on the surface of the measuring electrode as explained above followed then by the immobilization of the emo-protein to alkanethiols.

The cytochrome c in the oxidized state (Cyt c Fe³⁺) reacts with superoxide radicals passing to its reduced state (Fe²⁺ Cyt c) according to the following reaction scheme:

cyt. c (Fe3+) + O₂⁻ → cyt. c (Fe2+) + O₂

The cytochrome c in the reduced state may then be re-oxidized by electrochemical reaction according to the following reaction scheme:

cyt. c (Fe2+) → cyt. c (Fe3+) + e-

The electric current generated during this reaction is measured and it is directly proportional to the concentration of superoxide radicals formed in the reaction mixture, which is in turn directly proportional to the amount of reactive quinone species (and therefore the content of atmospheric particulates in the starting sample).

At this point, the content of particulate matter in the analyzed sample, or in a fraction thereof, can be determined or estimated by comparing the value of the measured property (spectroscopic or electrical) in the reaction medium with at least one known value of the same property of at least one reference sample of atmospheric particulate.

It has been surprisingly found that the amount of superoxide radicals generated in the reaction medium according to the method of the invention and the content of atmospheric particulate in the analyzed sample are directly proportional to each other according to a substantially linear relationship. This correlation is achieved regardless of the type of detection (for example, spectroscopic or electrochemical) used for the detection of superoxide radicals. Therefore, the method according to the invention allows quantifying in a precise manner and with high sensitivity the content of atmospheric particles in the analyzed sample by comparing the detection value of superoxide radicals with at least one reference standard, for example through a calibration curve.

This standard can be advantageously constituted by reference particulate materials of known composition, for example derived from the exhaust gas of diesel engines (Diesel Exhaust Particles), as known in the art.

In addition, the detection of the speed reduction of the emo-protein (in particular cytochrome c) by superoxide radicals formed in the reaction mixture, or in embodiments of the invention without emo-protein (cytochrome c), of the monolayer of mixed alkanethiols by superoxide radicals and/or other chemical oxidizing species formed in the reaction mixture, constitutes a direct indication of the oxidative potential of the sample under analysis, when compared with a scale of values related to the oxidative potential of a substance or molecule known (reference) for its oxidant ability, such as hydrogen peroxide .

It should also be noted that the use of cytochrome c, both in the spectrophotometric measurements and in those with electrochemical electrode modified by immobilization of alkanethiols and cytochrome c, as well as the electrochemical measurements conducted in the absence of cytochrome c (i.e. with electrode modified by immobilization of only alkanethiols) advantageously allows a virtually immediate and not discontinuous (i.e. in real time) detection of the analyte. Moreover, in the method according to the invention the sample preparation is very simple since it merely requires the suspension of the particulate sample in the organic solvent, possibly followed by a centrifugation in order to recover the fraction (supernatant) to be used as such for the detection phases. The method according to the invention thus appears to be operationally simpler and more immediate than the methods of the state of art cited above.

The method uses a device for the detection and quantification of atmospheric particulate matter and / or its oxidative potential in a sample that implements the method illustrated above.

In its most general aspect, this device comprises:
- a reaction unit for the reaction of a solution or a suspension obtained from a sample of atmospheric particulate in an organic solvent with a reducing agent in operating conditions in order to form superoxide radicals,
- a measurement unit for the variation of a property related to the concentration of the superoxide radicals formed in the reaction medium, this property variation resulting from the consumption by chemical reaction of said superoxide radicals by a detection substance or resulting from the interaction of said superoxide radicals with a detection substance, and
- a calculation unit for determining the content of particulate matter and / or the oxidative potential of said sample by comparing the value measured in the measuring unit with at least one known value of the same property from at least one reference sample having a known content of particulate matter and/or with a scale of values related to the oxidative potential of a substance or molecule known for its oxidizing properties.

The reaction unit includes the devices necessary to conduct and control the reaction of formation of superoxide radicals to be detected subsequently in the measuring unit such as the reagents as well as the instrumentation and the reaction vessels .

The measuring unit is constituted by any measurement device capable of measuring a variation of a property correlated to the concentration of said superoxide radicals to be detected such as in particular a spectrophotometric or electrochemical (current change) property. The measuring unit can include a spectrophotometer for absorbance measurements or spectrophotometer for measuring Raman scattering. Alternatively, the measuring unit comprises a sensor or biosensor able to detect an electric current proportional to the amount of the superoxide radicals formed in the reaction medium.

Preferably, such a sensor or biosensor comprises a measuring electrode, an auxiliary electrode (or counter electrode), and a reference electrode all in conductive material. The measuring electrode may be constituted by a chip with a surface coated and activated by means of a layer of an organic and/or biological substance able to interact with said superoxide radicals producing an electric signal proportional to the quantity of said superoxide radicals formed in the reaction medium and with which the measuring electrode comes into contact.

The surface coating of the measuring electrode is carried out by immobilizing a monolayer of at least one alkanethiol, preferably a mixture comprising 11-mercapto-1-undecanol (MU) and 11-mercaptoundecanoic acid (MUA).

The surface coating of the measuring electrode can also have the immobilization of an emo-protein, preferably cytochrome c, on at least a monolayer of alkanethiol.

The reaction, measurement and calculation units can be included in a single device or alternatively constitute a kit of devices.

Further characteristics and advantages of the present invention will become more apparent from the following description of some preferred embodiments, given by way of non-limitative example, with reference to the accompanying figures, in which:
- Figure 1 shows the reaction scheme for the reduction of cytochrome c in the presence of a reducing agent, such as DTT;
- Figure 2 shows the absorption spectra of cytochrome c in the oxidized form and in the reduced form ;
- Figure 3 shows a graph reporting the relationship between the speed of reduction of cytochrome c by the method of the invention, measured as change in absorbance, and the concentration of 1,2- naphthoquinone;
- Figure 4 shows a graph reporting the relationship between the speed of reduction of cytochrome c by the method of the invention, measured as change in absorbance, and the concentration of 9,10-phenanthrenequinone;
- Figure 5 shows a graph reporting the relationship between the speed of reduction of cytochrome c by the method of the invention, measured as change in absorbance, and the concentration of organic solutions of a particulate reference (SRM 1650b);
- Figure 6 shows a graph reporting the relationship between the speed of reduction of cytochrome c by the method of the invention, measured as change in absorbance, and the concentration of organic extracts of a particulate reference (SRM 1650b);
- Figure 7 shows a graph reporting the relationship between the speed of reduction of cytochrome c by the method of the invention, measured as change in absorbance, and the concentration of an organic solution of particulates sampled in environment (PM₁₀, PM_{2.5}) ;
- Figure 8 shows a graph reporting the variation of electric current over time relative to the oxidation- eduction alkanethiols immobilized on a measuring electrode by superoxide radicals according to the method of the invention, for a series of samples of known concentration of particulate standard (DEP) in organic solution;
- Figure 9 shows a graph reporting the average values of the current recorded in the last 50 seconds of the measures of Figure 8 with the relative standard deviation;
- Figure 10 shows a graph reporting the averaged values of the current recorded in the last 50 seconds of electrochemical measurements chronoamperometric) carried out on samples of atmospheric particulates PM₁₀) as function of the particulate content of these samples.
- Figure 11 shows a graph similar to that of Figure 10 for electrochemical measurements performed on two different measuring electrodes.

### Example 1

It was determined the correlation between the spectrophotometric response relative to the reduction of cytochrome c by superoxide radicals and the concentration of pure quinone compounds (which are normally present in atmospheric particulate) according to the method of the present invention.

The quinone compounds 1,2- naphthoquinone 9,10-phenanthrenequinone were in particular analyzed.

For each analysis a reaction mixture was prepared, from a buffer solution 50 mM TRIS-HC1 (pH 7.5) containing 50 pM of bovine or equine heart cytochrome c, 100 pM of DTT (or TCEP) and a known predetermined quantity (concentration) of the quinone compound coming from a its solution in DMSO having a concentration of 10 µM or dilutions thereof.

The reducing agent (DTT or TCEP) was added before the sample (quinone compound) in order to be able to quantitatively determine the rate of reduction of the cytochrome c, in terms of spectrophotometric response (change in absorbance over time), due only to the reducing agent. This value was then subtracted, for each measure, to the rate of reduction of cytochrome c observed in terms of spectrophotometric response (change in absorbance over time) measured after the addition of the sample.

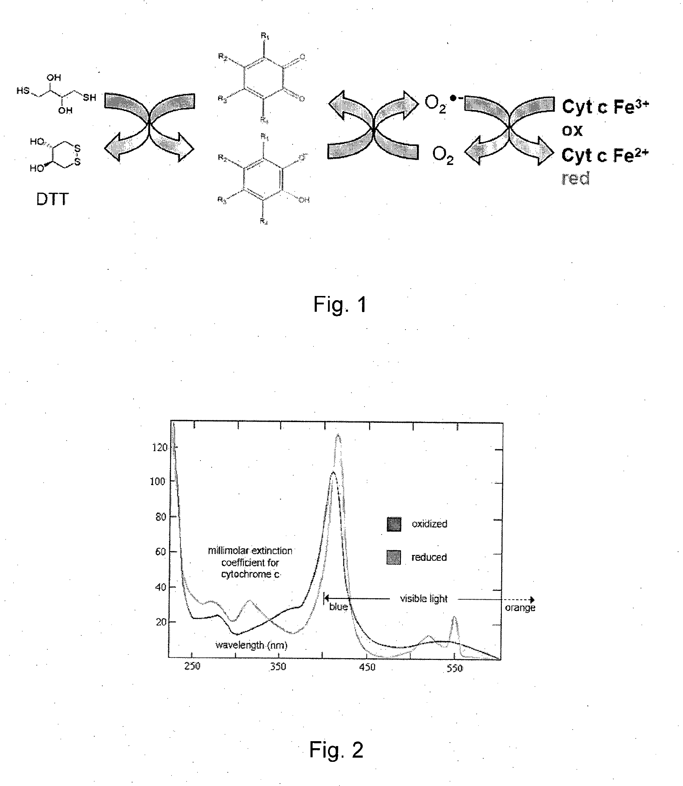

The spectroscopic properties of cytochrome c (Figure 2) allow detecting the progressive reduction as change in absorbance at 550 nm over time (ΔE₅₅₀/min). At this wavelength an absorption peak appears, which is characteristic of the reduced form of cytochrome c. Therefore, the speed of reduction of cytochrome c per unit time, detected by absorbance measurements at 550 nm, can be correlated to the amount of quinone compound present in the reaction mixture: higher is the amount of reactive quinone compounds present in the mixture of reaction, the faster is the change in absorbance at 550 nm. In fact, during the reduction reaction of cytochrome (Figure 1), only the reducing agent (DTT or TCEP) and cytochrome c in the oxidized form are consumed, while the quinone molecules and molecular oxygen are restored cyclically.

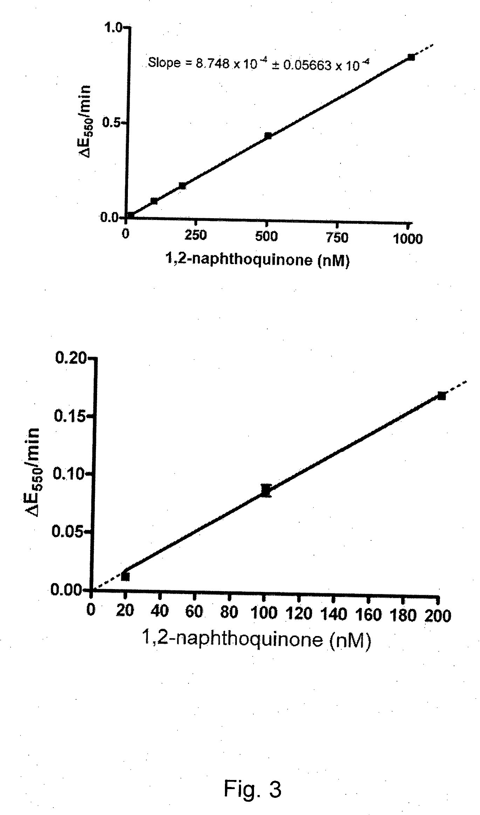

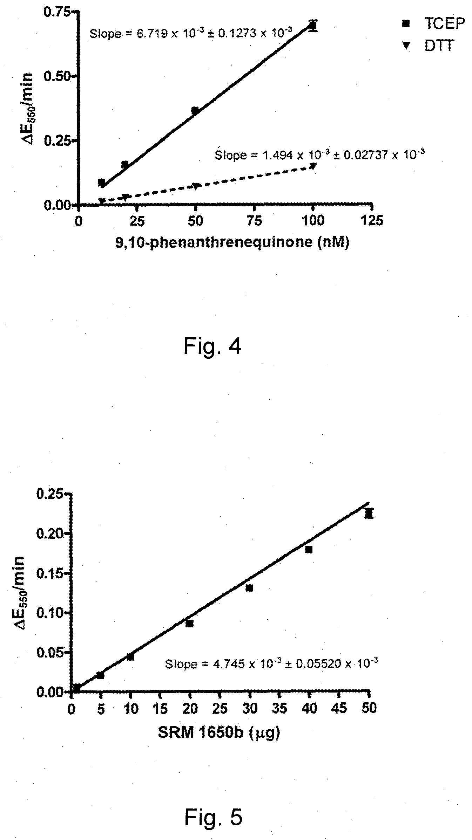

Then kinetic spectrophotometric measurements on the analyzed quinone compounds were performed by measuring the rate of reduction of cytochrome c as a change in absorbance at 550 nm over time (ΔE₅₅₀/min) by varying the concentration of the quinone compounds. The results of these spectrophotometric measurements are shown in the graph of Figure 3 with the respective magnification for 1,2-naphthoquinone and in the graph of Figure 4 for 9,10- phenanthrenequinone.

As it can be seen, the relationship between the concentration of pure 1,2-naphthoquinone (Figure 3) and 9,10-phenanthrenequinone (figure 4) and the speed of reduction of cytochrome c appears to be linear for both molecules with a yield of signal almost double in the case of phenanthrenequinone compared to the naphthoquinone. The reactivity of the TCEP, as alternative to the reducing agent DTT, was determined using the phenanthrenequinone. In this case the ΔE₅₅₀/min detected in the presence of TCEP is approx. 4.5 times greater than the DTT, at the same concentration of quinone.

### Example 2

The correlation between the spectrophotometric response for the reduction of cytochrome c by superoxide radicals and the concentration of a reference particulate material, called SRM 1650B (Standard Reference Material 1650B , Diesel Exhaust Particles) was determined.

For each analysis a reaction mixture was prepared, from a buffer solution, 50 mM TRIS-HCl (pH 7.5), containing 50 pM of bovine or equine heart cytochrome c, 100 pM DTT and a predetermined known quantity of the reference standard obtained by a solution thereof having a concentration of 1 mg/ml or its dilutions.

In particular, the solution of the reference standard was obtained by suspending a known quantity of the standard in DMSO and briefly mixing the resulting solution. The solid fraction (particles) was then eliminated by centrifugation although the presence of the solid residue in the reaction mixture does not interfere with the quantification of the sample. The elimination of the solid fraction allows reducing the turbidity of the solution thus lowering the value of the initial absorbance.

The reducing agent (DTT or TCEP) was added before the sample (reference standard) as reported in Example 1, described above. Therefore kinetic spectrophotometric measurements were carried out for each reaction mixture analyzed by measuring the rate of cytochrome c reduction as the change in absorbance at 550 nm over time (ΔE₅₅₀/min) which is function of the concentration of the reference standard. The results of these spectrophotometric measurements are shown in the graph of Figure 5 .

As it can be seen also in this case a linear relation between the initial amount of SRM 1650B and the spectrophotometric signal in the presence of DTT was determined. The lower limit of sensitivity using the DTT is around 1-2 µg of initial SRM 1650B, while it is plausible that, employing the TCEP as a reducing agent, the sensitivity is greater.

Therefore, in accordance with the present invention it is possible to determine or at least estimate the particulate content in atmospheric particulate samples of unknown content by measuring the change in absorbance of these samples in the manner illustrated above and correlating these measurements with a calibration curve previously obtained by similar measures of change in absorbance of samples of particulate material reference having known content (for example, the calibration curve shown in Figure 5) .

### Example 3

The example 2 was repeated using an organic extract of the reference material SRM 1650b instead of its solution in DMSO as previously described.

The organic extract was obtained by re-suspending a known amount of the standard SRM 1650b in acetonitrile. The particulate fraction was removed by centrifugation and the liquid fraction obtained was placed under vacuum to remove the solvent. The extract thus obtained was resuspended in DMSO.

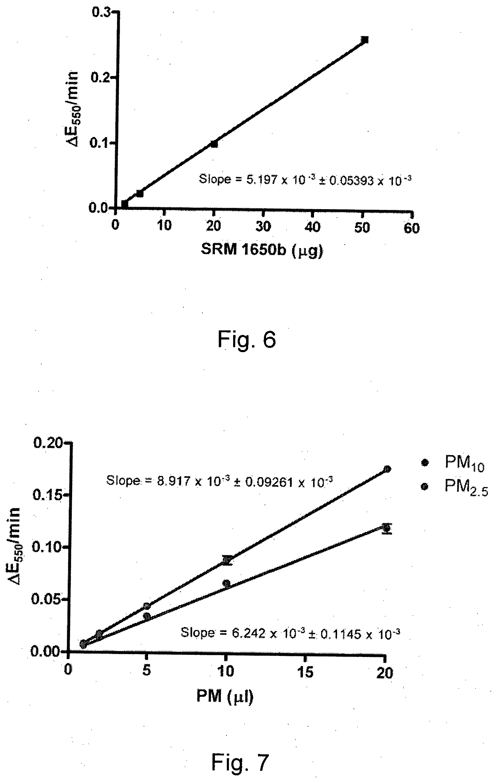

As in Example 2, kinetic spectrophotometric measurements were carried out for each reaction mixture by measuring the rate of reduction of cytochrome c as a change in absorbance at 550 nm over time (ΔE₅₅₀/min) according to different concentrations of the reference standard. The results of these spectrophotometric measurements are shown in the graph of Figure 6.

As it can be seen also in this case a linear relation was determined between the amount of SRM 1650B in the organic extract and the spectrophotometric signal. From the slope of the line (Figure 6) it can be seen that the yield of the signal is slightly higher than that obtained with the standard as such (figure 5), although this difference is not statistically significant.

Therefore, in accordance with the present invention it is possible to determine or at least estimate the particles content in atmospheric particulate samples of unknown content. The estimation or quantification is made by measuring the change in absorbance of these samples in the manner illustrated above and correlating these measurements with a calibration curve previously obtained by similar measures of absorbance change carried out on samples of reference particulate material with known content (for example, the calibration curve shown in Figure 6)

### Example 4

The correlation between the response on the spectrophotometric reduction of cytochrome c by superoxide radicals and samples of atmospheric particulate matter (PM₁₀ and PM_{2.5}) sampled in the environment was determined.

The sampling was carried out on polycarbonate filters for 24 hours at a site representative of urban traffic in Milan according to a per se conventional protocol. The quinone fraction of each particulate sample was obtained by washing the respective filter with a defined volume of DMSO, and collecting the resulting solution (i.e. the liquid fraction) in test tube.

For each analysis a reaction mixture was prepared from a buffer solution of 50 mM TRIS-HCl (pH 7.5) containing 50 pM of bovine or equine heart cytochrome c, 100 µM DTT and a known volume of the solution obtained from the particulate sample to be analyzed.

The reducing agent (DTT or TCEP) was added before the sample in each measurement in analogy with the Example 1 described above .

Therefore kinetics spectrophotometric measurements of each reaction mixture were carried out by measuring the rate of reduction of cytochrome c as a change in absorbance at 550 nm over time (ΔE₅₅₀/min) as a function of the volume of the solution obtained from the sampled particulate. The results of these spectrophotometric measurements are shown in the graph of Figure 7.

Even in this case a linear relation between the volume of solution added to the reaction mixture and the spectrophotometric signal was determined, although the absolute quantities in weight of each sample of PM are unknown.

However, these quantities may be determined or at least estimated in a conventional manner for example by constructing a calibration curve with known concentration of particulate matter of the same type.

### Example 5

The previous examples were repeated with the difference that the rate of reduction of cytochrome c was determined by measures of variation of Raman scattering. In fact, the conversion between oxidized and reduced form of cytochrome c also involves the vibrational transitions that can be detected by Raman spectroscopy. Even in this case it was found a linear correlation similar to that already shown by spectrophotometric measurements reported in the previous examples.

Thus, the measurements of Raman scattering, can be used as alternative to the spectrophotometer ones to determine or at least estimate the particulate content in samples of atmospheric PM of unknown content.

### Example 6

It was determined the correlation between the electrochemical response (variation of electric current) due to the oxidation-reduction of alkanethiols immobilized on the measuring electrode by superoxide radicals, according to the method of the invention, induced by the concentration of samples of standard particulate (Diesel Exhaust Particles SRM 1650b - hereinafter also referred to as DEP) .

In order to perform the electrochemical measurements an apparatus comprising a sensor having a measuring electrode, an auxiliary electrode (counter electrode) and a reference electrode, the latter two being conventional per se, were used.

The measuring electrode included a surface element in gold printed on chip. On the surface element a layer of alkanethiols was deposited by placing this element in contact with a solution of 5 mM MU/MUA in ethanol for 24 hours, and then rinsing with ethanol, to remove unbound thiols, and finally with water.

For each analysis a reaction mixture was prepared from a buffer solution of 50 mM TRIS-HCl (pH 7.5) containing 0.4 mM TCEP and a predetermined known quantity of the reference standard from a solution of known concentration.

The solution of the reference standard was obtained by suspending a known quantity of the standard in a defined volume of DMSO and shortly mixing the resulting solution.

This reaction mixture was put in contact with the measuring electrode and the change in electric current over time was recorded.

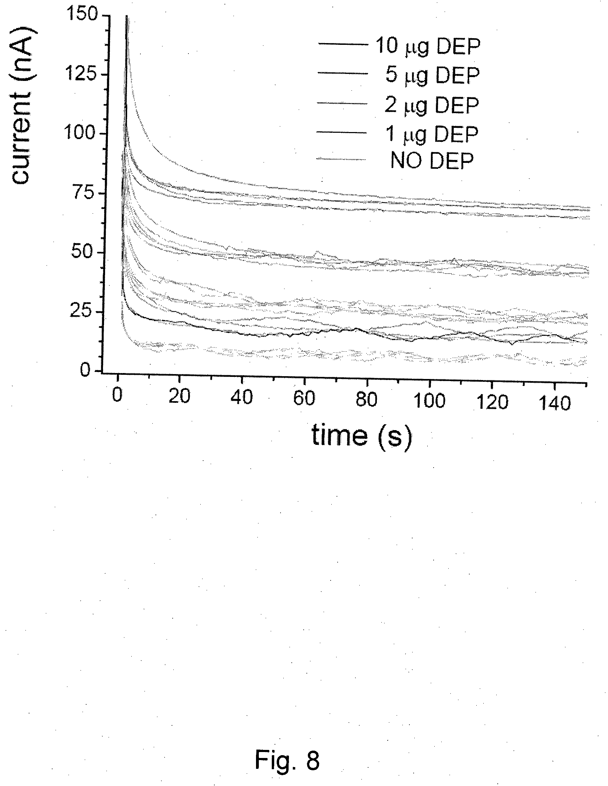

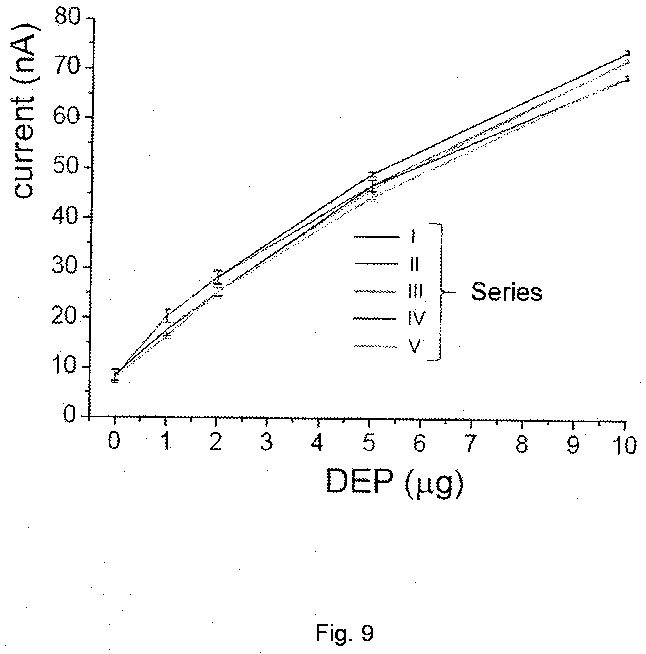

The results are shown in Figures 8 and 9. In particular, Figure 8 reports a graph showing the variation of current over time for each quantity of sample used, while Figure 9 shows a graph illustrating for each quantity of sample used the average value of current recorded in the last 50 seconds of the measurement (that is, in the stationary phase) with the relative deviation standard. Five series of current measurements were performed using for each series 0, 1, 2, 5 and 10 µg of sample. The DEP is expressed in micrograms related to the quantity of starting sample. It can be seen from Figure 8 that the value to be taken into consideration for the measurement is already reached after a few tens of seconds. The system sensitivity is 60 nA/decade of micrograms of DEP (SRM 1650b) and the minimum value in our experimental conditions is 1 microgram of original DEP (SRM 1650b).

Furthermore, from the graph of Figure 9 it can be noted that there is an almost linear correlation between the recorded electric current and the amount of particulate standard in the sample analyzed. Therefore, in accordance with the present invention it is possible to determine or at least estimate the particulate content in particulate atmospheric samples of unknown content not by measuring the change of electric current of such samples in the manner illustrated above and correlating these measurements with a calibration curve previously obtained by similar measures of variation of electric current carried out on samples of reference particulate material to known content (for example, the calibration curve shown in figure 9) .

### Example 7

It was determined the correlation among the electrochemical response (variation of electric current) due to the oxidation-reduction of alkanethiols immobilized on the measuring electrode by superoxide radicals according to the method of the invention and the content of particulate material from samples of atmospheric particulate PM₁₀ collected in the environment.

To perform the electrochemical measurements the apparatus described above in Example 6 was used.

The sampling was carried out on polycarbonate filters for 24 hours at a site representative of urban traffic of Milan according to a per se conventional protocol.

For each sample the respective mass concentration of PM₁₀ was determined by using the differential gravimetric technique of "double weighing", namely by determining the mass of the filter medium before and after the sample collection.

Each filter was then washed with a defined volume of DMSO thereby obtaining a respective solution (suspension) of PM₁₀ at known concentration.

For each analysis then a reaction mixture was prepared from a buffer solution of 50 mM TRIS-HCl (pH 7.5) containing 0.4 mM TCEP and a known amount of predetermined PM₁₀ resulting from a corresponding solution (suspension) of PMio at known concentration.

This reaction mixture was put in contact with the measuring electrode and the change of electric current over time was recorded.

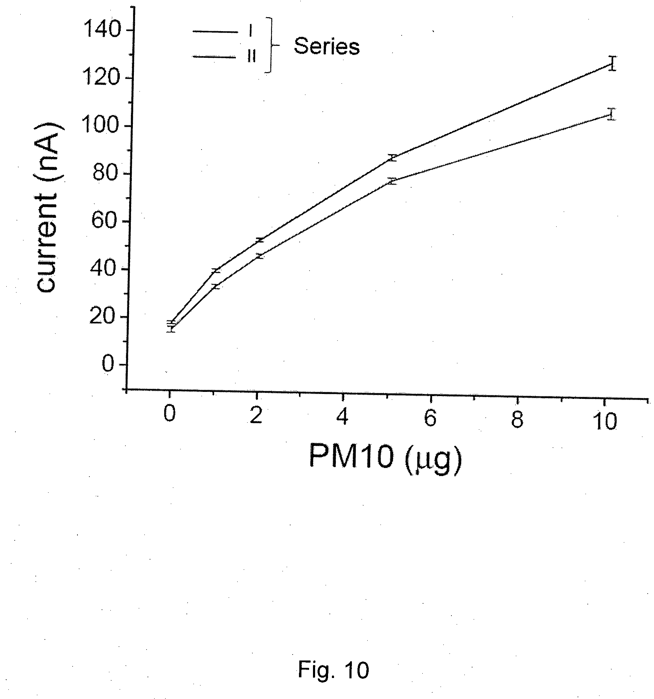

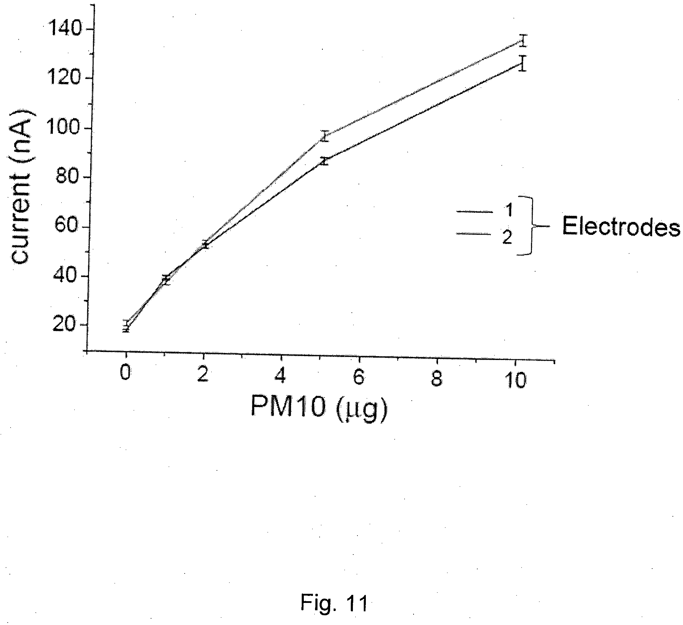

The results are shown in Figures 10 and 11. In particular, Figure 10 shows a graph illustrating for each quantity of sample used the average value of current recorded in the last 50 seconds of the measurement (that is, in its stationary phase) with the relative standard deviation. There are two series of current measurements using for each series 0, 1, 2, 5 and 10 µg of sample. Figure 11 shows instead a graph illustrating for each of the analyzed samples the averaged values of current recorded in the last 50 seconds of the measurement of two measurements with different electrodes both prepared as described in Example 6.

It can be noted that also in this case an almost linear correlation was found between the recorded electric current and the amount of PM₁₀ of the sample analyzed. Furthermore, for the same sample analyzed, the results of measurements of electric current does not vary significantly by performing the measurement with different electrodes as shown in Figure 11.

Therefore, in accordance with the present invention it is possible to determine or at least estimate the content of particulate matter (in the specific case PMio) in samples particulate of unknown content by measuring the change of electric current determined by these samples in the manner illustrated above and correlating these measurements with a calibration curve previously obtained by similar measures of electric current variation carried out on samples of known particulate content (for example, the calibration curve shown in Figure 10).

## Claims

1. Method for the detection and quantification of atmospheric particulates in a sample and/or of the oxidative potential of such a sample, the method comprising the following steps:
- collection of a sample of ambient particulate air matter,
- treatment of such a sample of atmospheric particulate matter with an organic solvent to obtain a solution or a suspension,
- reaction of said solution or said suspension or a fraction thereof with a reducing agent in operating conditions in a manner to form an oxidizing species,
- measurement of a variation of a property correlated to the concentration of said oxidizing species formed in the reaction medium, said variation of a property resulting from consumption by chemical reaction of said oxidizing species by a detecting substance or resulting from interaction of said oxidizing species with a detection substance,
- determination of the content of atmospheric particulate matter and/or of the oxidative potential of said sample by comparing the measured value of said property variation in the reaction medium with at least one known value of the same property of at least one sample or derivative thereof having a known content of particulate material and/or with a scale of values related to the oxidative potential of a substance or molecule known for its oxidant ability, such as hydrogen peroxide,
the method being **characterized in that** said oxidizing species is constituted by superoxide radicals.

2. Method according to claim 1 wherein said organic solvent is selected from dimethyl sulfoxide (DMSO), acetonitrile, and combinations thereof.

3. Method according to claim 1 or claim 2 wherein said sample suspension of particulate matter in the organic solvent is subjected to a separation step of solid and liquid fractions and said liquid fraction is subsequently subjected to reaction with said reducing agent in operating conditions such as to form said oxidizing species.

4. Method according to any one of the preceding claims wherein said reducing agent is selected from dithiothreitol (DTT) and tris(2-carboxyethyl)phosphine (TCEP).

5. Method according to any one of the preceding claims wherein the measurement of said variation in a property correlated to the concentration of said oxidizing species is carried out by spectroscopic technique by measuring a variation of a spectroscopic property, preferably absorbance or Raman scattering, of a detection substance able to consume by chemical reaction the superoxide radicals developed in the reaction medium.

6. Method according to claim 5, wherein said detection substance comprises a emo-protein capable of reacting with superoxide radicals according to an oxidation-reduction reaction of, said emo-protein being constituted by cytochrome c.

7. Method according to any one of claims 1 to 4, wherein the measurement of said variation in a property correlated to the concentration of said species is carried out by electrochemical technique by measuring a variation of electric current proportional to the concentration of said oxidizing species in the reaction medium.

8. Method according to claim 7 wherein said measure of variation of electric current is carried out by a sensor or biosensor comprising a measuring electrode, an auxiliary electrode (or counter electrode), and a reference electrode all made of conductive material, the measuring electrode having a measuring surface coated and activated with a layer of at least one organic and/or biological detection substance capable of interacting with said oxidizing species providing an electrical signal proportional to the amount of said oxidizing species formed in the reaction mixture with which the measuring electrode comes into contact.

9. Method according to claim 8 wherein the surface coating of said measuring electrode is carried out by immobilizing a monolayer of at least one alkanethiol, preferably a mixture comprising 11-mercapto-1-undecanol (MU) and 11-mercaptoundecanoic acid (MUA).

10. Method according to claim 9, wherein the surface coating of said measuring electrode further provides for the immobilization of an emo-protein, preferably cytochrome c, on said monolayer of at least one alkanethiol.

11. Method according to any one of the preceding claims wherein said measured value of said variation of property in the reaction medium is correlated with a calibration curve previously obtained from a plurality of values of the same property of the respective reference samples or derivatives thereof having a known content of particle material.

## Patentansprüche

1. Verfahren zur Detektion und Quantifizierung atmosphärischer Partikel in einer Probe und/oder des oxidativen Potentials einer solchen Probe, wobei das Verfahren die folgenden Schritte umfasst:
- Gewinnung einer Probe von Umgebungs-Luftfeinstaub,
- Behandlung einer solchen Probe von atmosphärischem Feinstaub mit einem organischen Lösungsmittel, um eine Lösung oder eine Suspension zu gewinnen,
- Reaktion der Lösung oder der Suspension oder einer Fraktion davon mit einem Reduktionsmittel unter Betriebsbedingungen, derart, dass eine oxidierende Spezies gebildet wird,
- Messung einer Änderung einer Eigenschaft, die mit der Konzentration der in dem Reaktionsmedium gebildeten oxidierenden Spezies korreliert, wobei diese Änderung einer Eigenschaft aus dem Verbrauch durch chemische Reaktion der oxidierenden Spezies durch eine detektierende Substanz resultiert oder aus einer Interaktion der oxidierenden Spezies mit einer Detektionssubstanz resultiert,
- Bestimmung des Gehalts an atmosphärischem Feinstaub und/oder des oxidativen Potentials der Probe durch Vergleichen des gemessenen Wertes der Eigenschaftsänderung in dem Reaktionsmedium mit wenigstens einem bekannten Wert derselben Eigenschaft wenigstens einer Probe oder eines Derivats davon mit einem bekannten Gehalt an Feinstaub und/oder mit einer Skala von Werten, die das oxidative Potential einer Substanz oder eines Moleküls betreffen, die bzw. das für ihre bzw. seine Oxidationsfähigkeit bekannt ist, wie etwa Wasserstoffperoxid,
wobei das Verfahren **dadurch gekennzeichnet ist, dass** die oxidierende Spezies von Superoxidradikalen gebildet wird.

2. Verfahren nach Anspruch 1, wobei das organische Lösungsmittel aus Dimethylsulfoxid (DMSO), Acetonitril und Kombinationen davon ausgewählt ist.

3. Verfahren nach Anspruch 1 oder Anspruch 2, wobei die Probensuspension von Feinstaub in dem organischen Lösungsmittel einem Trennungsschritt von fester und flüssiger Fraktion unterzogen wird und die flüssige Fraktion anschließend einer Reaktion mit dem Reduktionsmittel unter Betriebsbedingungen unterzogen wird, um die oxidierende Spezies zu bilden.

4. Verfahren nach einem der vorhergehenden Ansprüche, wobei das Reduktionsmittel aus Dithiothreitol (DTT) und Tris(2-carboxyethyl)phosphin (TCEP) ausgewählt ist.

5. Verfahren nach einem der vorhergehenden Ansprüche, wobei die Messung der Änderung einer Eigenschaft, die mit der Konzentration der oxidierenden Spezies korreliert, durch spektroskopische Verfahren durch Messen einer Änderung einer spektroskopischen Eigenschaft, vorzugsweise Absorption oder Raman-Streuung, einer Detektionssubstanz durchgeführt wird, die in der Lage ist, durch chemische Reaktion die in dem Reaktionsmedium entwickelten Superoxidradikale zu verbrauchen.

6. Verfahren nach Anspruch 5, wobei die Detektionssubstanz ein Emo-Protein umfasst, das in der Lage ist, mit Superoxidradikalen gemäß einer Oxidations-Reduktions-Reaktion des Emo-Proteins zu reagieren, das aus Cytochrom c besteht.

7. Verfahren nach einem der Ansprüche 1 bis 4, wobei die Messung der Änderung einer Eigenschaft, die mit der Konzentration der Spezies korreliert, durch ein elektrochemisches Verfahren durch Messen einer Änderung des elektrischen Stroms durchgeführt wird, der zu der Konzentration der oxidierenden Spezies in dem Reaktionsmedium proportional ist.

8. Verfahren nach Anspruch 7, wobei die Messung der Änderung des elektrischen Stroms von einem Sensor oder Biosensor durchgeführt wird, der eine Messelektrode, eine Hilfselektrode (oder Gegenelektrode) und eine Referenzelektrode umfasst, die alle aus leitendem Material hergestellt sind, wobei die Messelektrode eine Messfläche aufweist, die mit einer Schicht wenigstens einer organischen und/oder biologischen Detektionssubstanz beschichtet und aktiviert ist, die in der Lage ist, mit der oxidierenden Spezies zu interagieren und dabei ein elektrisches Signal zu liefern, das zu der Menge an oxidierender Spezies proportional ist, die in dem Reaktionsgemisch gebildet wird, mit dem die Messelektrode in Kontakt kommt.

9. Verfahren nach Anspruch 8, wobei die Oberflächenbeschichtung der Messelektrode durchgeführt wird, indem eine Monoschicht wenigstens eines Alkanthiols immobilisiert wird, vorzugsweise eines Gemischs, welches 11-Mercapto-1-undecanol (MU) und 11-Mercaptoundecansäure (MUA) umfasst.

10. Verfahren nach Anspruch 9, wobei die Oberflächenbeschichtung der Messelektrode ferner für die Immobilisierung eines Emo-Proteins, vorzugsweise von Cytochrom c, auf der Monoschicht wenigstens eines Alkanthiols sorgt.

11. Verfahren nach einem der vorhergehenden Ansprüche, wobei der gemessene Wert der Änderung einer Eigenschaft in dem Reaktionsmedium mit einer Kalibrationskurve korreliert wird, die zuvor aus mehreren Werten derselben Eigenschaft der jeweiligen Referenzproben oder Derivate davon mit einem bekannten Gehalt an Feinstaub gewonnen wurde.

## Revendications

1. Procédé pour la détection et la quantification de particules atmosphériques dans un échantillon et/ou du potentiel oxydant d'un tel échantillon, le procédé comportant les étapes suivantes :
- collecte d'un échantillon de matière particulaire d'air ambiant,
- traitement d'un tel échantillon de matière particulaire atmosphérique avec un solvant organique pour obtenir une solution ou une suspension,
- réaction de ladite solution ou de ladite suspension ou d'une fraction de celles-ci avec un agent réducteur dans des conditions d'exploitation de manière à former une espèce oxydante,
- mesure d'une variation d'une propriété corrélée à la concentration de ladite espèce oxydante formée dans le milieu réactionnel, ladite variation d'une propriété résultant de la consommation par une réaction chimique de ladite espèce oxydante par une substance de détection ou résultant de l'interaction de ladite espèce oxydante avec une substance de détection,
- détermination du contenu de la matière particulaire atmosphérique et/ou du potentiel oxydant dudit échantillon en comparant la valeur mesurée de ladite variation de propriété dans le milieu réactionnel avec au moins une valeur connue de la même propriété d'au moins un échantillon ou un dérivé de celui-ci ayant un contenu connu de matériau particulaire et/ou avec une échelle de valeurs liée au potentiel oxydant d'une substance ou molécule connue pour son pouvoir oxydant, comme le peroxyde d'hydrogène,
le procédé étant **caractérisé en ce que** ladite espèce oxydante est constituée de radicaux superoxydes.

2. Procédé selon la revendication 1, dans lequel ledit solvant organique est sélectionné parmi le diméthylsulfoxyde (DMSO), l'acétonitrile et une combinaison de ceux-ci.

3. Procédé selon la revendication 1 ou 2, dans lequel ladite suspension d'échantillon de matière particulaire dans le solvant organique est sujette à une étape de séparation des fractions solide et liquide et ladite fraction liquide est ensuite sujette à une réaction avec ledit agent réducteur dans des conditions d'exploitation de manière à former ladite espèce oxydante.

4. Procédé selon l'une quelconque des revendications précédentes, dans lequel ledit agent réducteur est sélectionné parmi le dithiothréitol (DTT) et la tris(2-carboxyethyl)phosphine (TCEP).

5. Procédé selon l'une quelconque des revendications précédentes, dans lequel la mesure de ladite variation d'une propriété corrélée à la concentration de ladite espèce oxydante est réalisée par une technique spectroscopique en mesurant une variation d'une propriété spectroscopique, de préférence l'absorbance ou la diffusion Raman, d'une substance de détection capable de consommer par réaction chimique les radicaux superoxydes développés dans le milieu réactionnel.

6. Procédé selon la revendication 5, dans lequel la substance de détection comprend une hémoprotéine capable de réagir avec les radicaux superoxydes selon une réaction d'oxydoréduction, ladite hémoprotéine étant constituée par le cytochrome c.

7. Procédé selon l'une quelconque des revendications 1 à 4, dans lequel la mesure de ladite variation d'une propriété corrélée à la concentration de ladite espèce est réalisée par une technique électrochimique en mesurant la variation du courant électrique proportionnel à la concentration de ladite espèce oxydante dans le milieu réactionnel.

8. Procédé selon la revendication 7, dans lequel ladite mesure de variation du courant électrique est réalisée par un capteur ou biocapteur comprenant une électrode de mesure, une électrode auxiliaire (ou contre-électrode), et une électrode de référence, toutes composées de matériau conducteur, l'électrode de mesure ayant une surface de mesure recouverte et activée par une couche d'au moins une substance de détection organique et/ou biologique capable d'interagir avec ladite espèce oxydante, fournissant un signal électrique proportionnel à la quantité de ladite espèce oxydante formée dans le mélange réactionnel avec lequel l'électrode de mesure est en contact.

9. Procédé selon la revendication 8, dans lequel la surface recouverte de ladite électrode de mesure est réalisée en immobilisant une monocouche d'au moins un alcanethiol, de préférence un mélange comprenant du 11-mercapto-1-undécanol (MU) et de l'acide 11-mercaptoundécanoique (MUA).

10. Procédé selon la revendication 9, dans lequel la surface recouverte de ladite électrode de mesure prévoit en outre l'immobilisation d'une hémoprotéine, de préférence le cytochrome c, sur ladite monocouche d'au moins un alcanethiol.

11. Procédé selon l'une quelconque des revendications précédentes, dans lequel ladite valeur mesurée de ladite variation de propriété dans le milieu réactionnel est corrélée avec une courbe d'étalonnage précédemment obtenue d'une pluralité de valeurs de la même propriété des échantillons de référence respectifs ou des dérivés de ceux-ci ayant un contenu connu de matériau particulaire.
